# EUROPÄISCHE PATENTSCHRIFT

(11) **EP 1 163 479 B1**
(45) Veröffentlichungstag und Bekanntmachung des Hinweises auf die Patenterteilung: **18.08.2004**
(21) Anmeldenummer: 99973114.4
(22) Anmeldetag: 23.11.1999
(51) Int. Cl.: F24F 5/00, F25B 13/00

(54) **VERWENDUNG EINER LÜFTUNGSANORDNUNG FÜR GEBÄUDE**
USE OF A VENTILATION ARRANGEMENT FOR BUILDINGS
UTILISATION D'UN SYSTEME DE VENTILATION POUR BATIMENTS

(30) Priorität: 30.11.1998 DE 19861020; 19.01.1999 DE 19901871
(43) Veröffentlichungstag der Anmeldung: 19.12.2001
(73) Patentinhaber: Fraunhofer-Gesellschaft zur Förderung der angewandten Forschung e.V., 80686 München (DE)
(72) Erfinder: BÜHRING, Andreas, D-79117 Freiburg (DE); DA SILVA, Pedro, D-70839 Gerlingen (DE)
(74) Vertreter: Rösler, Uwe, Dipl.-Phys.
(86) Internationale Anmeldenummer: PCT/EP1999/009047
(87) Internationale Veröffentlichungsnummer: WO 2000/032994

(56) Entgegenhaltungen:
- DE-A- 3 635 425
- GB-A- 2 168 136
- US-A- 4 924 681
- US-A- 5 050 394

## Beschreibung

### Stand der Technik

In neu errichteten Wohngebäuden werden in Zukunft verstärkt Lüftungsgeräte mit Wärmerückgewinnung eingebaut. Diese führen zu einem erhöhten Komfort, da der notwendige Luftaustausch automatisch sichergestellt wird und durch die Wärmerückgewinnung das Temperatumiveau der Zuluft deutlich angehoben wird. Die in den Wohnräumen anfallende Feuchte wird permanent abgeführt, so daß Bauschäden durch Feuchteanfall vermieden werden. Durch die Nutzung der Abluftwärme zur Vorerwärmung der Zuluft kann der Heizwärmebedarf gesenkt und somit Energie eingespart werden. Deshalb werden diese Systeme im Rahmen der geltenden Wärmeschutzverordnung und aller Voraussicht nach auch bei der neuen Energieeinsparverordnung durch einen Bonus berücksichtigt.

Wird ein derartiges Lüftungssystem mit einem Erdreichwärmeübertrager zur Vorerwärmung der Frischluft kombiniert, liegt das Temperatumiveau der Fortluft auch nach der Wärmeabgabe an die Zuluft in einer Größe, die eine energieeffiziente Nutzung durch eine Wärmepumpe zuläßt. Die Wärmepumpe kann die rückgewonnene Wärme zusammen mit der in Wärme umgewandelten Antriebsenergie bei Heizbedarf an die Zuluft abgeben und sonst für die Trinkwassererwärmung bereitstellen.

Im Niedrigenergiehaus kann damit ein nennenswerter Anteil der Heizwärme gedeckt werden. Außerhalb der Kemheizperiode kann die Warmwasserbereitung vollständig von der Abluftwärmepumpe gedeckt werden, wobei die Kombination mit einer thermischen Solaranlage die Energieeffizienz steigert.

Im Passivhaus kann durch die oben beschriebene Gerätekombination eine fast vollständige Deckung des gesamten Wärmebedarfs erfolgen. Durch die Einsparung des im Niedrigenergiehaus noch notwendigen zusätzlichen Heizsystems kommt es zu geringeren Investitionen in die Haustechnik.

Der Wärmebedarf zur Brauchwassererwärmung erreicht im Niedrigenergiehaus eine Größe von 30 bis 50% des gesamten Wärmebedarfs und kann im Passivhaus sogar dominieren. Wird das Wasser von der Wärmepumpe erwärmt, so ist ein höheres Temperatumiveau gefordert als bei der Zulufterwärmung. Dadurch sinkt üblicherweise die Effizienz (Leistungszahl) von Wärmepumpen.

Überdies wird für einen gesteigerten sommerlichen Komfort oft eine Kühlung der Wohnräume gewünscht. Der steigende Absatz meist wenig effizienter Splitgeräte zur Raumkühlung zeigt den herrschenden Bedarf.

Es gibt für die Realisierung der Wärmenutzung auf unterschiedlichen Temperatumiveaus bereits unterschiedliche Ansätze. Grundsätzlich werden dabei zwei Verflüssiger derart miteinander verschaltet, daß sie vom Kältemittel in Reihe durchströmt werden. Wenn allerdings nur eine der beiden Wärmeanforderungen besteht (also Luftheizung oder Brauchwassererwärmung) muß entweder jeweils ein Verflüssiger durch einen Bypass umgangen werden oder es erfolgt eine unerwünschte Wärmeabgabe an einer Stelle, an der kein Bedarf besteht.
Soll dieser Wärmeverlust vermieden werden und wird zusätzlich gefordert, daß die Wärmepumpe im Kühlmodus betrieben werden kann und dabei nach Möglichkeit auch noch Brauchwasser erwärmt, so sind bisher sehr aufwendige und damit teure und störungsanfällige Schaltungen realisiert worden.

So geht aus der GB 2 168 136 A eine luftunterstützte Warmwasseraufbereitungsanlage hervor, die einen so genannten Wärmepumpenkreislauf vorsieht, der aus einem Kompressor Wärmeübertrager und zwei Verflüssigereinheiten besteht. Entweder wird die gesamte Wärme des Kühlmittels auf das Wasser übertragen oder es bleibt ein nennenswerter Teil der Wärmeenergie im Kältemittel zurück, die im Falle eines Heizbedarfes sinnvoll genutzt werden kann, jedoch im Falle ohne Heizbedarf ungenutzt bleibt.

Aus der US 4 924 681 geht eine Wärmepumpenanordnung zur Brauchwassererwärmung hervor, die den Kühlkreislauf darüber hinaus in verschiedenen Betriebszuständen nutzt, bspw. zur Kühlung oder Erwärmung der Rauminnenluft. Eine entsprechende Anordnung ist auch der US 5 050 394 zu entnehmen. Eine Gebäudelüftung unter wärmetechnisch ökonomischen Gesichtspunkten ist jedoch mit den bekannten Anordnungen nicht möglich.

### Darstellung der Erfindung

Der Erfindung liegt die Aufgabe zugrunde eine Möglichkeit zur Lüftung für ein Gebäude anzugeben, daß die vorstehend beschriebene, teilweise dominierende Wärmeanforderung mit gesteigerter Leistungszahl und erhöhtem Warmwasserkomfort zu erfüllen ist. Dabei soll die Kombination mit unterschiedlichen Pufferspeichem für thermische Solaranlagen problemlos möglich sein.
Überdies soll für einen gesteigerten sommerlichen Komfort eine Kühlung der Wohnräume möglich sein. Schließlich soll die Lüftungsanordnung günstig in der Herstellung und im Betrieb sein und überdies sicher gegen Störanfälle sein.

Die Lösung der Aufgabe ist Gegenstand des Anspruchs 1. Den Erfindungsgedanken vorteilhaft weiterbildende Merkmale sind Gegenstand der Unteransprüche.

### Kurze Beschreibung von Ausführungsbeispielen der Erfindung

Ausführungsbeispiele der Erfindung werden nachstehend unter Bezugnahme auf die Zeichnung exemplarisch beschrieben. Es zeigen:
- Fig. 1: Prinzipdarstellung der neuen Lüftungsanordnung,
- Fig. 2: Lüftungsanordnung im Brauchwasserbetrieb,
- Fig. 3: Lüftungsanordnung im Zuluftheizbetrieb,
- Fig. 4: Lüftungsanordnung für Brauchwassererwärmung und Zuluftheizung
- Fig. 5: Lüftungsanordnung im Kühlbetrieb und gleichzeitiger Wassererwärmung und
- Fig. 6: Lüftungsanordnung zur Kühlung der Zuluft unter Abgabe der Überschußwärme an die Abluft.

### Wege zur Ausführung der Erfindung, gewerbliche Verwendbarkeit

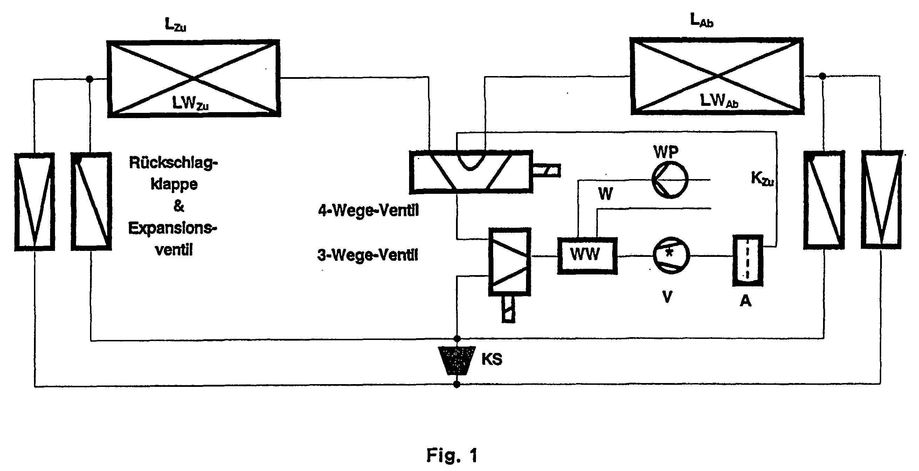

Mit dem in Figur 1 dargestellten Konzept wird eine sehr einfache Schaltung realisiert, die alle oben genannten Anforderungen erfüllt. Kernstück ist die Reihenschaltung eines Kältemittel/Wasser-Wärmeübertragers WW mit wasserseitig geregeltem Massenstrom W und eines Kättemittet/Luft-Wärmeübertragers LW_{Zu} oder LW_{Ab}, für den ein Bypass vorgesehen ist. Durch die Wasserpumpe WP besteht die Möglichkeit, den Wärmeentzug aus dem Kältemittel einfach zu regeln. Besteht Bedarf an warmem Wasser, aber nicht an Heizenergie, wird die Pumpe WP mit Nenndrehzahl betrieben. Dadurch wird dem Kältemittel die Wärme bis zur Unterkühlung entzogen und das flüssige Kältemittel fließt in den Kältemittelsammler KS. Hierbei kann durch geschickte konstruktive Gestaltung sogar das Dreiwegeventil durch ein einfaches Magnetventil ersetzt werden.

Besteht jedoch nur Heizbedarf und kein Bedarf an warmem Wasser, so wird die Pumpe WP ausgeschaltet. In diesem Fall erwärmt sich nur der Inhalt des Wärmeübertragers WW ohne Wärme an den Brauchwasserkreis W abzugeben. Wird er konstruktiv in der Zuluft L_{Zu} angeordnet, so dient seine Wärmeabgabe ausschließlich der gewünschten Zulufterwärmung.

Liegen jedoch beide Anforderungen gleichzeitig vor, so kann die Pumpe WP mit einer geringeren Drehzahl als der Nenndrehzahl betrieben werden. Dadurch wird nur ein Teil der Wärme auf das Wasser übertragen, der Rest geht an die Zuluft.

Für die Regelung der Pumpe gibt es zwei Möglichkeiten:
Wird eine drehzahlgeregelte Pumpe mit vorgeschaltetem Inverter verwendet, so kann der Durchfluß stufenlos geregelt werden. Mit einem Temperatursensor am Wasseraustritt des Wärmeübertragers kann somit innerhalb weiter Betriebsgrenzen eine definierte Austrittstemperatur des Wassers eingestellt werden. Hierdurch kann ein hoher Brauchwasserkomfort erreicht werden, da sehr schnell Wasser von gewünschter Temperatur in einem Warmwasserspeicher zur Verfügung steht. Da gleich die gewünschte Endtemperatur erreicht wird, könnte bei einem Pufferspeicherkonzept auf eine Ladelanze verzichtet werden. Beachtet werden muß der relativ hohe Preis der geregelten Pumpe, des Inverters und des Sensors. Außerdem darf der Inverter möglichst keinen oder zumindest einen sehr geringen Stand-by-Stromverbrauch haben.

Einfacher wäre die Verwendung einer Wechseistrompumpe und eine Ansteuerung dieser Pumpe mit Phasenanschnittsteuerung oder mit Pulsweitenmodulation.
Mit einer zweistufigen Pumpe kann ein definierter Wassermassenstrom für den gemischten Betrieb eingestellt werden. Durch die Nutzung des starken Unterschiedes des Wärmeübertragungsvermögens bei laminarer und turbulenter Strömung des Wassers im Wärmeübertrager kann die Differenz der Drehzahl begrenzt werden. Dieses Konzept hat den Vorteil einer sehr einfachen Regelung und geringerer Kosten, kann jedoch nicht den oben beschriebenen Komfort gewährleisten.

Eine weitere Alternative zur Massenstromregelung für den, durch den Wärmeübertrager fließenden Massenstrom stellt die Nutzung des Auftriebes des erwärmten Wassers innerhalb des Wärmeübertragers dar. Durch den thermischen Auftrieb des erwärmten Wassers innerhalb des Wärmetauschers ist eine automatische Beladung eines Pufferspeichers ohne den Einsatz von Hilfsenergie möglich. Zwar ist hierfür eine konstruktive Abstimmung von Lüftungsgerät mit Wärmepumpe und einem Solarspeicher erforderlich, doch kann durch das Vermeiden von Hilfsenergie die Leistungszahl der Wassererwärmung erheblich gesteigert werden.

Durch die geringere Dichte des erwärmten Wassers strömt dieses durch eine Beladevorrichtung - vorzugsweise eine Schichtlanze mit Beladeöffnungen in mehreren Höhen - bis zu einer Höhe mit gleicher Temperatur im Speicher. Dieses Prinzip wird in Thermosyphon-Solarkollektoren (Standard im Mittelmeerraum) und früher in der Schwerkraftheizung genutzt.

Mit Hilfe des in Figur 1 ebenfalls dargestellten Vierwegeventils kann die Funktion des Verflüssigers in der Luft und des Verdampfers ausgetauscht werden. Damit kann die Zuluft bei sommerlichem Kühlbedarf als Wärmequelle für die Brauchwassererwärmung verwendet werden. Damit ergibt sich ein doppelter Nutzen der eingesetzten elektrischen Antriebsenergie.

Besteht jedoch kein Bedarf an warmem Wasser, weil der Warmwasserspeicher z.B. bereits von einer thermischen Solaranlage erwärmt wurde, kann die Überschußwärme auch an die Abluft abgegeben werden. Dann besteht der Nutzen allerdings nur noch in der Kühlleistung, die aus Gründen der rationellen Energienutzung möglichst selten in Anspruch genommen werden sollte. Deshalb sollte auf eine gute Gestaltung des Gebäudes und die vorrangige Nutzung eines eventuellen Erdreichwärmeübertragers zur Frischluftkühlung Wert gelegt werden.

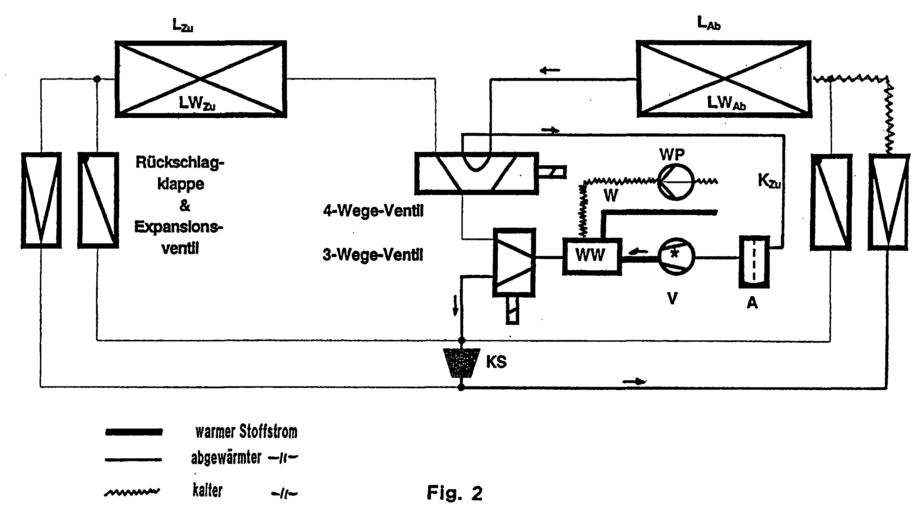

Der Betrieb der Wärmepumpe WP im Brauchwasserbetrieb ist in Figur 2 dargestellt. Die Wasserpumpe WP läuft bei höchster Drehzahl, so daß die gesamte Enthitzung, Kondensation und Unterkühlung im Kältemittel/Wasser-Wärmeübertrager WW stattfindet. Das Dreiwegeventil gibt den Bypass zum Kältemittelsammler frei. Die Pfeile an den Leitungen geben die Richtung des Kältemittel-Massenstromes an.

Der Kreislauf im Massenstrom erfolgt wie folgt: Die Wasserpumpe WP fördert kaltes Wasser in den Wärmeübertrager WW. Dort wird das Brauchwasser W aufgewärmt. Durch WW fließt vom Verdichter V überhitztes Kältemittel K_{ZU}, das vom Wärmeübertrager L_{Ab} über das 4-Wege-Ventil und den Abscheider A herrührt. Vom Wärmeübertrager WW gelangt das abgekühlte Kältemittel über das 3-Wege-Ventil in den Kältemittelsammler KS und wird mittels Expansionsventil verflüssigt und abgekühlt. Ein kalter Kältemittel-Flüssigkeitsstrom gelangt in den Abluft-Wärmeübertrager LW_{AB}.

In Figur 2 ist als Legende angegeben welche Stoffströme wie temperiert sind. Die dicke Linienführung entspricht einem warmen Stoffstrom, die normal durchgezogene Linie entspricht einem abgewärmten Stoffstrom und die zickzack ausgeführte Linienform entspricht einem kalten Stoffstrom. Auf die derart eingeführte Linienbedeutung wird auch in den weiteren Figuren entsprechend Bezug genommen.

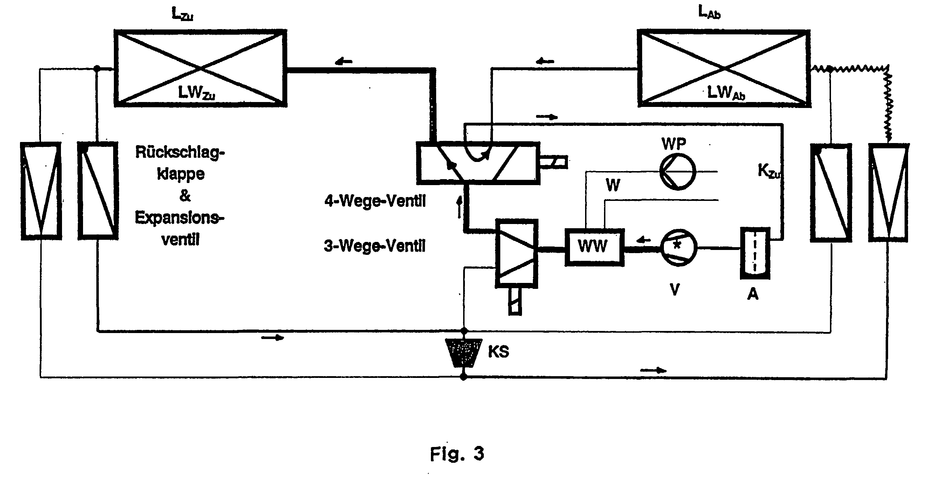

Die ausschließliche Zulufterwärmung ist in Figur 3 skizziert. Dafür wird die Wasserpumpe WP ausgestellt und das Dreiwegeventil gibt die Verbindung zum Eingang des Vierwegeventils frei.

Der Kreislauf im Massenstrom der Figur 3 erfolgt wie folgt:
Durch WW fließt vom Verdichter überhitztes Kältemittel, das vom Wärmeübertrager L_{Ab} über das 4-Wege-Ventil und den Abscheider herrührt. Vom Wärmeübertrager WW gelangt das überhitzte Kältemittel unverändert über das 3-Wege-Ventil und das 4-Wege-Ventil an den Zutuftwärmeübertrager LW_{Zu}. Hier wird die Zuluft erwärmt, wobei der in der Leitung strömende Kältemittel-Massenstrom verflüssigt wird. Abgewärmt gelangt der Strom über eine Rückschlagklappe in den Kältemittelsammler KS und über ein Expansionsventil wieder in den Abluftwärmeübertrager LW_{Ab}.

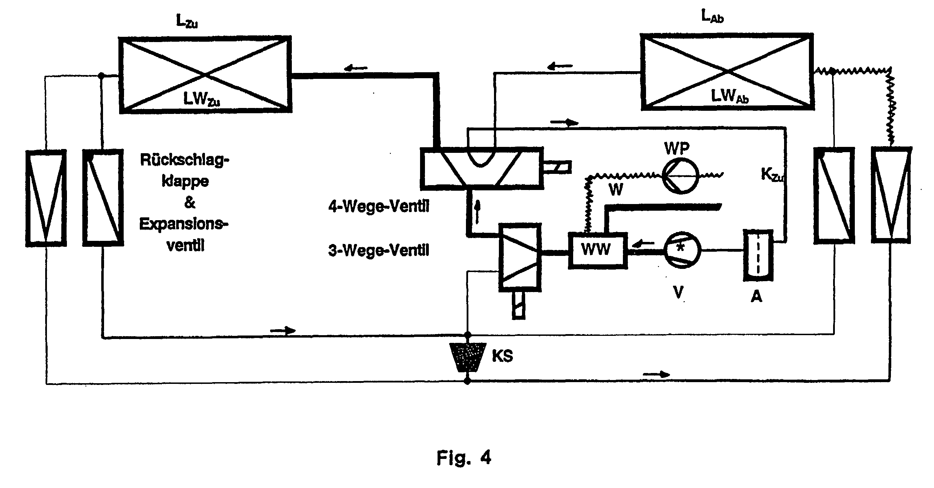

In Figur 4 wird die gleichzeitige Wassererwärmung und Zuluftheizung dargestellt:
Durch den Betrieb der Wasserpumpe WP mit geringerer Drehzahl wird bei gleicher Ventitstellung wie im Zulüftheizbetrieb gemäß Figur 3 ein Teil der Wärme an das Wasser abgegeben. Wird eine drehzahlgeregelte Wasserpumpe verwendet, so kann die Austrittstemperatur des Wassers aus dem Wärmeübertrager auf die gewünschte Solltemperatur eingestellt werden.

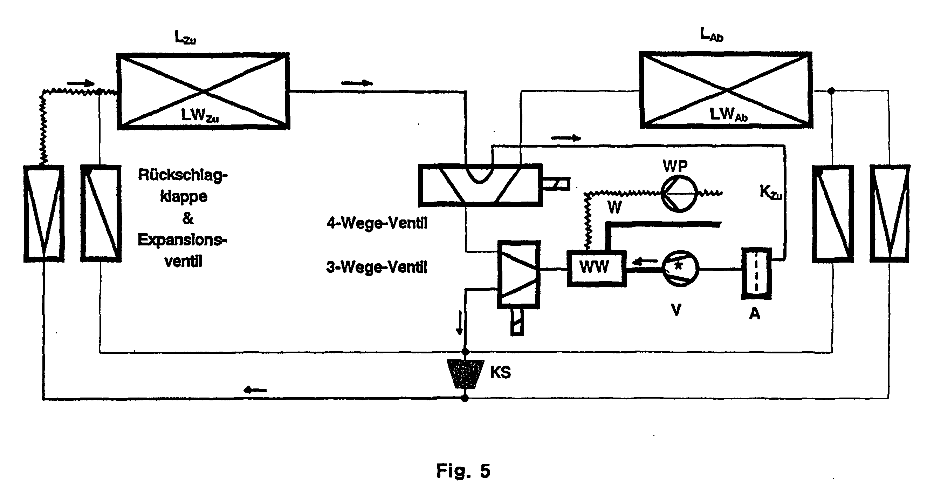

In Figur 5 ist ein Kühlbetrieb mit gleichzeitiger Wassererwärmung gezeigt:
Besteht sommerlicher Bedarf an Warmwasser, der nicht ausreichend durch eine thermische Solaranlage gedeckt wird, so kann durch Umschalten des Vierwegeventils die Wärme der Zuluft entnommen werden. Dadurch kann gleichzeitig ein Komfortgewinn durch Kühlung der Wohnräume erreicht werden.

Hierbei strömt durch den Wärmetauscher WW überhitztes Kältemittel, dessen Wärme an das Wasser W abgegeben wird. Das abgewärmte Kältemittel gelangt über den Kältemittelsammler in das Expansionsventil, in dem ein Abkühlprozeß stattfindet. Der kalte Stoffstrom entnimmt der Zuluft im Zuluft-Wärmetauscher LW_{Zu} Wärme und kühlt diese dadurch. Der aus dem Zuluft-Wärmetauscher LW_{Zu} austretende erwärmte Kältemittelstrom gelangt über das 4-Wege-Ventil und den Abscheider wieder in den Verdichter.

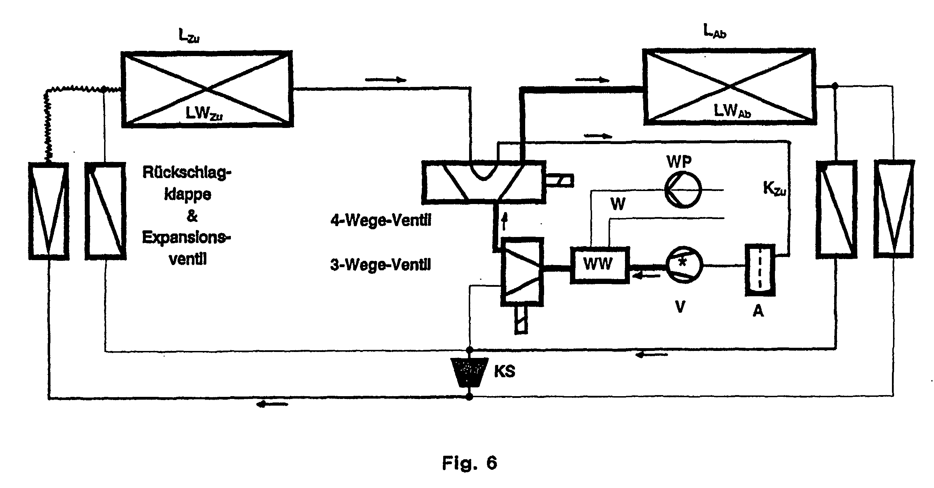

In Figur 6 ist eine Lüftungsanordnung zur Kühlung der Zuluft bei Abgabe der Überschußwärme an die Fortluft angegeben. Diese Schaltungsanordnung eignet sich insbesondere für den Abtaubetrieb des Verdampfers.

Die Wärmepumpe WP eignet sich in der beschriebenen Schaltung ebenfalls zur reinen Kühlung der belüfteten Räume. Wenn der Wasserspeicher ein maximales Temperatumiveau erreicht hat wird mit dem Dreiwegeventil auf den Kältemittel/Luft-Wärmeübertrager für die Abluft L_{Ab} umgeschaltet. Damit hat die bereitgestellte Wärme allerdings i.a. keinen Nutzen mehr. Dieser Fall sollte also möglichst selten auftreten. Er bietet allerdings den Bewohnern einen höheren thermischen Komfort an besonders heißen Tagen und hat eine höhere Effizienz als sonst eventuell eingesetzte einfache Split-Kühlgeräte.

Die Schaltung kann ebenfalls zur Abtauung des Verdampfers LW_{Ab} im winterlichen Betrieb in einem der drei ersten Fälle verwendet werden. Dabei wird die mit Reif bzw. Eis bedeckte Oberfläche des Verdampfers in der feuchten Abluft von der Wärmepumpe aktiv erwärmt. Dafür muß die Erstarrungsenthalpie des gefrorenen Wassers zugeführt werden. Das flüssige Wasser fließt dann über den Abfluß ab, so daß die vorher, dem in der Abluft befindlichen Wasserdampf entzogene Verdampfungsenthalpie als Wärmegewinn erhalten bleibt.

Die Wärme für die Abtauung wird mit der Leistungszahl der Wärmepumpe zur Verfügung gestellt. Dafür wird die Zuluft kurzzeitig abgekühlt. Diese Energiemenge kann die Wärmepumpe anschließend wiederum mit entsprechender Leistungszahl der Wärmebereitung ausgleichen. Damit ist diese Abtauung einer direktelektrischen ebenso wie einer Bypass-Heißgasabtauung energetisch überlegen.

Je nach Auslegung der Stellsignale dauert dieser Vorgang drei bis sechs Minuten. In dieser Zeit darf es nicht zu unbehaglichen Zulufttemperaturen in den belüfteten Räumen kommen. Für einen noch genauer zu untersuchenden Zeitraum wird die thermische Speichermasse der Zuluftseite des Lüftungsgerätes und des Luftverteilnetzes für eine Anhebung der Temperatur auf mindestens 17 °C sorgen. Diese Zeit darf beim Abtauvorgang nicht überschritten werden. Andererseits braucht die Wärmepumpe nach einer Abtauung wiederum eine gewisse Zeit, bis die Leistungszahlen des konstanten Betriebes wieder hergestellt sind. Zwischen diesen beiden Zielen ist in der konkreten Auslegung der Wärmepumpe eine Optimierung durchzuführen.

## Patentansprüche

1. Verwendung einer Lüftungsanordnung für ein Gebäude mit Wärmeentzug aus einem, aus dem Gebäude gerichteten Abluftstrom (L_{Ab}) und/oder aus einem in das Gebäude gerichteten Zuluftstrom (L_{Zu}),
- mit einer Wärmepumpe, die einen Kältemittel/Wasser-Wärmeübertrager (WW), der wasserseitig einen diskret oder kontinuierlich regelbaren Massenstrom aufweist, einen für den Abluftstrom (L_{Ab}) dienenden Kältemittel/Luft-Wärmeübertrager ( LW_{Ab}) und einen für den Zuluftstrom (L_{Zu}) dienenden Kältemittel/Luft-Wärmeübertrager ( LW_{Zu}), wobei die Kältemittel/Luft-Wärmeübertrager (LW_{Zu}) und (LW_{Ab}) jeweils in Reihe zu dem Kältemittel/Wasser-Wärmeübertrager (WW) zuschaltbar sind, vorsieht, und wobei der Kältemittel/Wasser-Wärmeübertrager (WW) eine Kältemittelzuleitung (K_{Zu}) aufweist, in der ein Verdichter (V) vorgesehen ist und die mit dem, für den Abluftstrom (L_{Ab}) dienenden Kältemittel/Luft-Wärmeübertrager (LW_{Ab}) verbunden und in der ein gasförmiges erwärmtes Kältemittel enthalten ist, das von dem als Verdampfer arbeitenden Kältemittel/Luft-Wärmeübertrager (LW_{Ab}) herrührt, der wiederum mit dem Kältemittel/Wasser-Wärmeübertrager (WW) verschaltet ist,
- zur Erwärmung des Wassermassenstromes (W), wobei dem Kältemittel innerhalb des Kältemittel/Luft-Wärmeübertrager (LW_{Ab}) durch Verdampfen des Kältemittels Wärme vom Abluftstrom (L_{Ab}) zugeführt wird und das gasförmige Kältemittel nachfolgend dem Verdichter (V) zugeführt wird, durch den das Kältemittel mittels Kompression einer weiteren Erwärmung unterliegt, dessen Wärme wenigstens teilweise an den Wassermassenstrom (W) in dem Kältemittel/Wasser-Wärmeübertrager (WW) abgegeben wird.

2. Verwendung nach Anspruch 1,
**dadurch gekennzeichnet, dass** die Regelung des Wasser-Massenstroms mittels einer Wasserpumpe (WP) erfolgt, und dass die Wasserpumpe (WP) mit großer, vorzugsweise höchster Förderleistung arbeitet.

3. Verwendung einer Lüftungsanordnung für ein Gebäude mit Wärmeentzug aus einem aus dem Gebäude gerichteten Abluftstrom (L_{Ab}) und/oder aus einem in das Gebäude gerichteten Zuluftstrom (L_{Zu})
- mit einer Wärmepumpe, die einen Kältemittel/Wasser-Wärmeübertrager (WW), der wasserseitig einen mittels einer Wasserpumpe (WP) diskret oder kontinuierlich regelbaren Massenstrom aufweist, einen für den Abluftstrom (L_{Ab}) dienenden Kältemittel/Luft-Wärmeübertrager ( LW_{Ab}) und einen für den Zuluftstrom (L_{Zu}) dienenden Kältemittel/Luft-Wärmeubertrager ( LW_{Zu}), wobei die Kältemittel/Luft-Wärmeübertrager (LW_{Zu}) und (LW_{Ab}) jeweils in Reihe zu dem Kältemittel/Wasser-Wärmeübertrager (WW) zuschaltbar sind, vorsieht, und wobei der Kältemittel/Wasser-Wärmeübertrager (WW) eine Kältemittelzuleitung (K_{Zu}) aufweist, in der ein Verdichter (V) vorgesehen ist und die mit dem, für den Abluftstrom (L_{Ab}) dienenden Kältemittel/Luft-Wärmeübertrager (LW_{Ab}) verbunden und in der ein gasförmiges erwärmtes Kältemittel enthalten ist, das von dem als Verdampfer arbeitenden Kältemittel/Luft-Wärmeübertrager (LW_{Ab}) herrührt, der mit dem, für den Zuluftstrom (L_{Zu}) dienenden, als Verflüssiger arbeitenden Kältemittel/Luft-Wärmeübertrager (LW_{Zu}), verbunden ist, der wiederum mit dem Kältemittel/Wasser-Wärmeübertrager (WW) verschaltet ist,
- zur Erwärmung des Zuluftstromes (L_{Zu}) wobei die Wasserpumpe (WP) ausgestellt ist und wobei dem Kältemittel innerhalb des Kältemittel/Luft-Wärmeübertragers (LW_{Ab}) durch Verdampfen des Kältemittels Wärme vom Abluftstrom (L_{Ab}) zugeführt wird und das gasförmige Kältemittel nachfolgend dem Verdichter (V) zugeführt wird, durch den das Kältemittel mittels Kompression einer weiteren Erwärmung unterliegt und von dem das erwärmte, gasförmige Kältemittel dem als Verflüssiger arbeitenden Kältemittel/Luft-Wärmeübertrager (LW_{Zu}) zugeführt wird, durch den der Zuluftstrom (L_{Zu}) erwärmt wird.

4. Verwendung nach Anspruch 3 und gleichzeitiger Erwärmung des Wassermassenstromes (W) durch Inbetriebnahme der Wasserpumpe (WP), durch die bei geringer Förderleistung oder geringer Drehzahl ein Teil der Wärme des weiter erwärmten, gasförmigen Kältemittels innerhalb des Kältemittel/Wasser-Wärmeübertragers (WW) an den Wassermassenstrom (W) übergeben wird.

5. Verwendung einer Lüftungsanordnung für ein Gebäude mit Wärmeentzug aus einem aus dem Gebäude gerichteten Abluftstrom (L_{Ab}) und/oder aus einem in das Gebäude gerichteten Zuluftstrom (L_{Zu})
- mit einer Wärmepumpe, die einen Kältemittel/Wasser-Wärmeübertrager (WW), der wasserseitig einen diskret oder kontinuierlich regelbaren Massenstrom aufweist einen für den Abluftstrom (L_{Ab}) dienenden Kältemittel/Luft-Wärmeübertrager ( LW_{Ab}) und einen für den Zuluftstrom (L_{Zu}) dienenden Kältemittel/Luft-Wärmeübertrager (LW_{Zu}), wobei die Kältemittel/Luft-Wärmeübertrager (LW_{Zu}) und (LW_{Ab}) jeweils in Reihe zu dem Kältemittel/Wasser-Wärmeübertrager (WW) zuschaltbar sind, vorsieht, und wobei der Kältemittel/Wasser-Wärmeübertrager (WW) eine Kältemittelzufeitung (K_{Zu}) aufweist, in der ein Verdichter (V) vorgesehen ist, und die mit dem, für den Zuluftstrom (L_{Zu}) dienenden Kältemittel/Luft-Wärmeübertrager (LW_{Zu}) verbunden ist, wobei in der Kältemittelzuleitung (K_{Zu}) gasförmiges erwärmtes Kältemittel enthalten ist, das von dem als Verdampfer arbeitenden Kältemittel/Luft-Wärmeübertrager (LW_{Zu}) herrührt, der mit dem Kältemittel/Wasser-Wärmeübertrager (WW) verschaltet ist,
- zur Kühlung des Zuluftstromes (L_{Zu}) durch Wärmeentzug aus der Zuluft mittels des Kältemittels, das dem als Verdampfer arbeitenden Kältemittel/Luft-Wärmeübertrager (LW_{Zu}) in flüssiger Form zugeführt wird.

6. Verwendung nach Anspruch 5 und gleichzeitiger Erwärmung des Wassermassenstromes (W) durch Zufuhr des erwärmten, verdampften, gasförmigen Kältemittels zum Kältemittel/Wasser-Wärmeübertrager (WW), wobei eine Wasserpumpe (WP) Wasser (W) durch den Kältemittel/Wasser-Wärmeübertrager (WW) fördert.

7. Verwendung nach Anspruch 5 und gleichzeitiger Erwärmung des Abluftstromes (L_{Ab}) zur gezielten Abtauung des Kältemittel/Luft-Wärmeübertragers (LW_{Ab}) durch Zufuhr des erwärmten, verdampften, gasförmigen Kältemittels an den, als Verflüssiger arbeitenden Kättemittet/Luft-WärmeObertrager (LW_{Ab}).

8. Verwendung nach einem der Ansprüche 1 bis 7,
**dadurch gekennzeichnet, dass** die Massenstromregelung mittels einer Wasserpumpe (WP) erfolgt, die drehzahlgeregelt oder mittels mehrerer diskreter Drehzahlstufen einen Wassermassenstrom (W) dem Kältemittel/Wasser-Wärmeübertrager (WW) zufördert und die den Massenstrom vollständig unterbindet bis hin mit einer Maximatförderieistung fördert.

9. Verwendung nach einem der Ansprüche 1 bis 8,
**dadurch gekennzeichnet, daß** die Massenstromregelung mittels einer Wasserpumpe (WP) mit mehreren Drehzahlstufen erfolgt, deren Regelung unter Nutzung des Umschlagverhaltens des Wassers zwischen laminarer und turbulenter Wasserströmung innerhalb des Wärmeübertragers (WW) erfolgt.

10. Verwendung nach einem der Ansprüche 1 oder 3,
**dadurch gekennzeichnet, dass** die Massenstromregelung unter teilweiser oder ausschließlicher Nutzung des Auftriebs des erwärmten Wassers im Wärmeübetrager (WW) erfolgt.

11. Verwendung nach einem der Ansprüche 1 bis 10,
**dadurch gekennzeichnet, dass** die Kältemittelzuleitung (K_{Zu}) über ein Vierwege-Ventil mit dem Kättemittet/Luft-Wärmeübertrager (LW_{Zu}) oder (LW_{Ab}) verschaltbar ist.

12. Verwendung nach Anspruch 11,
**dadurch gekennzeichnet, dass** der Kältemittel/Wasser-Wärmeübertrager (WW) über ein Dreiwege-Ventil (3V) oder ein Vierwegeventil (4V) mit dem Kältemittelsammler und/oder zusätzlich über das Vierwege-Ventil (4V) mit dem Kältemittel/Luft-Wärmeübertrager (LW_{Zu}) oder (LW_{Ab}) verschaltbar ist.

## Claims

1. A use of a ventilation arrangement for a building with heat extraction from an outgoing air flow (L_{Ab}) directed out of the building and/or from an incoming air flow (L_{Zu}) directed into the building,
- with a heat pump which provides a coolant/water heat transfer medium (WW) which is supplyable wiht a discretely or continuously controllable mass flow on the water side, a coolant/air heat transfer medium (LW_{Ab}) used for the outgoing air flow (L_{Ab}) and a coolant/air heat transfer medium (LW_{Zu}) used for the incoming air flow (L_{Zu}), wherein the coolant/air heat transfer media (LW_{Zu}) and (LW_{Ab}) can be connected respectively in series to the coolant/water heat transfer medium (WW), and wherein the coolant/water heat transfer medium (WW) has a coolant intake (K_{Zu}) in which a compressor (V) is provided and which is connected to the coolant/air heat transfer medium (LW_{Ab}) used for the outgoing air flow (L_{Ab}) and in which a gaseous heated coolant is contained, which comes from the coolant/air heat transfer medium (LW_{Ab}) working as an evaporator, which in turn is connected to the coolant/water heat transfer medium (WW),
- for heating the water mass flow (W) wherein heat from the outgoing air flow (L_{ab}) is supplied to the coolant inside the coolant/air heat transfer medium (LW_{Ab}) by evaporation of the coolant and the gaseous coolant is then supplied to the compressor (V), through which the coolant undergoes further heating by means of compression, which heat is at least partly delivered to the water mass flow (W) in the coolant/water heat transfer medium (WW).

2. The use according to claim 1, **characterised in that** the water mass flow is regulated by means of a water pump (WP), and that the water pump (WP) operates at a high, preferably highest, delivery rate.

3. A use of a ventilation arrangement for a building with heat extraction from an outgoing air flow (L_{Ab}) directed out of the building and/or from an incoming air flow (L_{Zu}) directed into the building,
- with a heat pump which provides a coolant/water heat transfer medium (WW) which is supplyable with a mass flow on the water side which is discretely or continuously controllable by means of a water pump (WP), a coolant/air heat transfer medium (LW_{Ab}) used for the outgoing air flow (L_{Ab}) and a coolant/air heat transfer medium (LW_{Zu}) used for the incoming air flow (L_{Zu}), wherein the coolant/air heat transfer media (LW_{Zu}) and (LW_{Ab}) can be connected respectively in series to the coolant/water heat transfer medium (WW), and wherein the coolant/water heat transfer medium (WW) has a coolant intake (K_{Zu}) in which a compressor (V) is provided and which is connected to the coolant/air heat transfer medium (LW_{Ab}) used for the outgoing air flow (L_{Ab}) and in which a gaseous heated coolant is contained, which comes from the coolant/air heat transfer medium (LW_{Ab}) working as an evaporator, which is connected to the coolant/air heat transfer medium (LW_{Zu}) operating as a condenser, used for the incoming air flow (L_{Zu}), which in turn is connected to the coolant/water heat transfer medium (WW),
- for heating the incoming air flow (L_{Zu}), wherein the water pump (WP) is switched off and wherein heat from the outgoing air flow (L_{ab}) is supplied to the coolant inside the coolant/air heat transfer medium (LW_{Ab}) by evaporation of the coolant and the gaseous coolant is then supplied to the compressor (V), through which the coolant undergoes further heating by means of compression and from which the heated, gaseous coolant is then supplied to the coolant/air heat transfer medium (LW_{Zu}) operating as condenser, through which the incoming air flow (L_{Zu}) is heated.

4. The use according to claim 3 and simultaneous heating of the water mass flow (W) by operating the water pump (WP) by which, at low delivery rate or low speed, some of the heat of the further heated, gaseous coolant inside the coolant/water heat transfer medium (WW) is transferred to the water mass flow (W).

5. A use of a ventilation arrangement for a building with heat extraction from an outgoing air flow (L_{Ab}) directed out of the building and/or from an incoming air flow (L_{Zu}) directed into the building,
- with a heat pump which provides a coolant/water heat transfer medium (WW) which is supplyable with a discretely or continuous controllable mass flow on the water side, a coolant/air heat transfer medium (LW_{Ab}) used for the outgoing air flow (L_{Ab}) and a coolant/air heat transfer medium (LW_{Zu}) used for the incoming air flow (L_{Zu}), wherein the coolant/air heat transfer media (LW_{Zu}) and (LW_{Ab}) can be connected respectively in series to the coolant/water heat transfer medium (WW), and wherein the coolant/water heat transfer medium (WW) has a coolant intake (K_{Zu}) in which a compressor (V) is provided and which is connected to the coolant/air heat transfer medium (LW_{Ab}) used for the incoming air flow (L_{Zu}) wherein a gaseous heated coolant is contained in the coolant intake (K_{Zu)}, which comes from the coolant/air heat transfer medium (LW_{Zu}) working as an evaporator, which is connected to the coolant/water heat transfer medium (WW),
- for cooling the incoming air flow (L_{Zu}) by extraction of heat from the incoming air by means of the coolant which is supplied in liquid form to the coolant/air heat transfer medium (LW_{Zu}) working as an evaporator.

6. The use according to claim 5 and simultaneous heating of the water mass flow (W) by supply of heated, evaporated, gaseous coolant to the coolant/water heat transfer medium (WW), wherein a water pump (WP) conveys water (W) through the coolant/water heat transfer medium (WW).

7. The use according to claim 5 and simultaneous heating of the outgoing air flow (L_{Ab}) for specific defrosting of the coolant/air heat transfer medium (LW_{Ab}) by supplying heated, evaporated gaseous coolant to the coolant/air heat transfer medium (LW_{Ab}) operating as a condenser.

8. The use according to any one of claims 1 to 7, **characterised in that** the mass flow is regulated by means of a water pump (WP) which conveys a water mass flow (W) to the coolant/water heat transfer medium (WW) in a speed-controlled fashion or by means of a plurality of discrete speed steps and which completely prevents the mass flow until it conveys at a maximum delivery rate.

9. The use according to any one of claims 1 to 8, **characterised in that** the mass flow is regulated by means of a water pump (WP) with a plurality of speed steps which are regulated using the transfer behaviour of the water between laminar and turbulent inside the water transfer medium (WW).

10. The use according to any one of claims 1 or 3, **characterised in that** the mass flow is regulated partly or exclusively using the lift of the heated water in the heat transfer medium (WW).

11. The use according to any one of claims 1 to 11, **characterised in that** the coolant intake (K_{Zu}) can be connected via a four-way valve to the coolant/air heat transfer medium (LW_{Zu}) or (LW_{Ab}).

12. The use according to claim 11, **characterised in that** the coolant/water heat transfer medium (WW) can be connected via a three-way valve (3V) or a four-way valve (4V) to the coolant collector and/or additionally via the four-way valve (4V) to the coolant/air heat transfer medium (LW_{Zu}) or (LW_{Ab}).

## Revendications

1. Utilisation d'un dispositif d'aération pour bâtiment avec extraction de chaleur d'un courant d'air d'échappement (L_{Ab}) dirigé hors du bâtiment et/ou d'un courant d'air d'alimentation (L_{Zu}) dirigé dans le bâtiment,
- comportant une pompe à chaleur qui prévoit un échangeur de chaleur à produit refroidisseur/à eau (WW) qui présente du côté de l'eau un flux massique réglable à intervalles réguliers ou en continu, un échangeur de chaleur à produit refroidisseur/à air (LW_{Ab}) servant pour le courant d'air d'échappement (L_{Ab}) et un échangeur de chaleur à produit refroidisseur/à air (LW_{Zu}) servant pour le courant d'air d'alimentation (L_{Zu}), les échangeurs de chaleur à produit refroidisseur/à air (LW_{Zu}) et (LW_{Ab}) étant connectables respectivement en série à l'échangeur de chaleur à produit refroidisseur/à eau (WW), et
l'échangeur de chaleur à produit refroidisseur/à eau (WW) présentant une conduite d'alimentation en produit refroidisseur (K_{Zu}) dans laquelle est prévu un compresseur (V) et qui est reliée à l'échangeur de chaleur à produit refroidisseur/à air (LW_{Ab}) servant pour le courant d'air d'échappement (LW_{Ab}) et qui contient un produit refroidisseur chauffé sous forme gazeuse qui provient de l'échangeur de chaleur à produit refroidisseur/à air (LW_{Ab}) faisant office de vaporisateur, qui est son tour connecté à l'échangeur de chaleur à produit refroidisseur/à eau (WW),
- pour chauffer le flux massique d'eau (W), de la chaleur du courant d'air d'échappement (L_{Ab}) étant acheminée au produit refroidisseur à l'intérieur de l'échangeur de chaleur à produit refroidisseur/à air (LW_{Ab}) par évaporation du produit refroidisseur et le produit refroidisseur sous forme gazeuse étant ensuite acheminé au compresseur (V) grâce auquel le produit refroidisseur subit par compression une autre chauffe dont la chaleur est envoyée du moins partiellement au flux massique d'eau (W) dans l'échangeur de chaleur à produit refroidisseur/à eau (WW).

2. Utilisation selon la revendication 1, **caractérisée en ce que** la régulation du flux massique d'eau est réalisé au moyen d'une pompe à eau (WP) et que la pompe à eau (WP) fonctionne avec une grande capacité de transport, de préférence maximale.

3. Utilisation d'un dispositif d'aération pour bâtiment avec extraction de chaleur d'un courant d'air d'échappement (L_{Ab}) dirigé hors du bâtiment et/ou d'un courant d'air d'alimentation (L_{Zu}) dirigé dans le bâtiment,
- comportant une pompe à chaleur qui prévoit un échangeur de chaleur à produit refroidisseur/à eau (WW) qui présente du côté de l'eau un flux massique réglable à intervalles réguliers ou en continu au moyen d'une pompe à eau (WP), un échangeur de chaleur à produit refroidisseur/à air (LW_{Ab}) servant pour le courant d'air d'échappement (L_{Ab}) et un échangeur de chaleur à produit refroidisseur/à air (LW_{Zu}) servant pour le courant d'air d'alimentation (L_{Zu}), les échangeurs de chaleur à produit refroidisseur/à air (LW_{Zu}) et (LW_{Ab}) étant connectables respectivement en série à l'échangeur de chaleur à produit refroidisseur/à eau (WW), et l'échangeur de chaleur à produit refroidisseur/à eau (WW) présentant une conduite d'alimentation en produit refroidisseur (K_{Zu}) dans laquelle est prévu un compresseur (V) et qui est reliée à l'échangeur de chaleur à produit refroidisseur/à air (LW_{Ab}) servant pour le courant d'air d'échappement (L_{Ab}) et qui contient un produit refroidisseur chauffé sous forme gazeuse qui provient de l'échangeur de chaleur à produit refroidisseur/à air (LW_{Ab}) faisant office de vaporisateur, qui est relié à l'échangeur de chaleur à produit refroidisseur/à air (LW_{Zu}) servant pour le courant d'air d'alimentation (L_{Zu}) et faisant office de condenseur, qui est son tour connecté à l'échangeur de chaleur à produit refroidisseur/à eau (WW),
- pour chauffer le courant d'air d'alimentation (L_{Zu}), la pompe à eau (WP) étant installée et de la chaleur du courant d'air d'échappement (L_{Ab}) étant acheminée au produit refroidisseur à l'intérieur de l'échangeur de chaleur à produit refroidisseur/à air (LW_{Ab}) par évaporation du produit refroidisseur et le produit refroidisseur sous forme gazeuse étant ensuite acheminé au compresseur (V) grâce auquel le produit refroidisseur subit par compression une autre chauffe et par lequel le produit refroidisseur chauffé sous forme gazeuse est acheminé à l'échangeur de chaleur à produit refroidisseur/à air (LW_{Zu}) faisant office de condensateur, qui chauffe le courant d'air d'alimentation (L_{Zu}).

4. Utilisation selon la revendication 3 et chauffe simultanée du flux massique d'eau (W) par mise en route de la pompe à eau (WP) grâce à laquelle, en cas d'une faible capacité de transport ou d'un faible régime, une partie de la chaleur du produit refroidisseur sous forme gazeuse chauffé davantage est transférée à l'intérieur de l'échangeur de chaleur à produit refroidisseur/à eau (WW) au flux massique d'eau (W).

5. Utilisation d'un dispositif d'aération pour bâtiment avec extraction de chaleur d'un courant d'air d'échappement (L_{Ab}) dirigé hors du bâtiment et/ou d'un courant d'air d'alimentation (L_{Zu}) dirigé dans le bâtiment,
- comportant une pompe à chaleur qui prévoit un échangeur de chaleur à produit refroidisseur/à eau (WW) qui présente du côté de l'eau un flux massique réglable à intervalles réguliers ou en continu, un échangeur de chaleur à produit refroidisseur/à air (LW_{Ab}) servant pour le courant d'air d'échappement (L_{Ab}) et un échangeur de chaleur à produit refroidisseur/à air (LW_{Zu}) servant pour le courant d'air d'alimentation (L_{Zu}), les échangeurs de chaleur à produit refroidisseur/à air (LW_{Zu}) et (LW_{Ab}) étant connectables respectivement en série à l'échangeur de chaleur à produit refroidisseur/à eau (WW), et
- l'échangeur de chaleur à produit refroidisseur/à eau (WW) présentant une conduite d'alimentation en produit refroidisseur (K_{Zu}) dans laquelle est prévu un compresseur (V) et qui est reliée à l'échangeur de chaleur à produit refroidisseur/à air (LW_{Zu}) servant pour le courant d'air d'alimentation (L_{Zu}), la conduite d'alimentation en produit refroidisseur (K_{Zu}) contenant du produit refroidisseur chauffé sous forme gazeuse qui provient de l'échangeur de chaleur à produit refroidisseur/à air (LW_{Zu}) faisant office de vaporisateur, qui est connecté à l'échangeur de chaleur à produit refroidisseur/à eau (WW),
- pour refroidir le courant d'air d'alimentation (L_{Zu}) par extraction de chaleur
de l'air d'alimentation au moyen du produit refroidisseur, qui est acheminé sous forme liquide à l'échangeur de chaleur à produit refroidisseur/à air (LW_{Zu}) faisant office de vaporisateur.

6. Utilisation selon la revendication 5 et chauffe simultanée du flux massique d'eau (W) par acheminement du produit refroidisseur chauffé, évaporé et sous forme gazeuse à l'échangeur de chaleur à produit refroidisseur/à eau (WW), une pompe à eau (WP) transportant de l'eau (W) à travers l'échangeur de chaleur à produit refroidisseur/à eau (WW).

7. Utilisation selon la revendication 5 et chauffe simultanée du courant d'air d'échappement (L_{Ab}) pour dégivrage intentionnel de l'échangeur de chaleur à produit refroidisseur/à air (LW_{Ab}) par acheminement du produit refroidisseur chauffé, évaporé et sous forme gazeuse à l'échangeur de chaleur à produit refroidisseur/à air (LW_{Ab}) faisant office de condensateur.

8. Utilisation selon l'une quelconque des revendications 1 à 7, **caractérisée en ce que** la régulation du flux massique est réalisée au moyen d'une pompe à eau (WP) qui transporte avec un régime régulé ou au moyen de plusieurs niveaux de régime distincts un flux massique d'eau (W) à l'échangeur de chaleur à produit refroidisseur/à eau (WW) et transporte le flux massique depuis l'arrêt total jusqu'à une capacité de transport maximale.

9. Utilisation selon l'une quelconque des revendications 1 à 8, **caractérisée en ce que** la régulation du flux massique est réalisée au moyen d'une pompe à eau (WP) à plusieurs niveaux de régime, dont la régulation se fait en utilisant le comportement de l'eau alternant entre un flux laminaire et un flux à turbulences à l'intérieur de l'échangeur de chaleur (WW).

10. Utilisation selon l'une quelconque des revendications 1 ou 3, **caractérisée en ce que** la régulation du flux massique est réalisée en utilisant partiellement ou exclusivement la poussée verticale de l'eau chauffée dans l'échangeur de chaleur (WW).

11. Utilisation selon l'une quelconque des revendications 1 à 10, **caractérisée en ce que** la conduite d'alimentation en produit refroidisseur (K_{Zu}) est connectable par une soupape à quatre distributions à l'échangeur de chaleur à produit refroidisseur/à air (LW_{Zu}) ou (LW_{Ab}).

12. Utilisation selon la revendication 11, **caractérisée en ce que** l'échangeur de chaleur à produit refroidisseur/à eau (WW) est connectable par une soupape à trois distributions (3V) ou une soupape à quatre distributions (4V) au collecteur de produit refroidisseur et/ou en plus par la soupape à quatre distributions (4V) à l'échangeur de chaleur à produit refroidisseur/à air (LW_{Zu}) ou (LW_{Ab}).
